# EUROPEAN PATENT SPECIFICATION

(11) **EP 1 621 869 B1**
(45) Date of publication and mention of the grant of the patent: **19.08.2015**
(21) Application number: 04254458.5
(22) Date of filing: 26.07.2004
(51) Int. Cl.: G01N 21/55, G01N 21/77

(54) **Optical biosensor**
Optischer Biosensor
Biocapteur optique

(43) Date of publication of application: 01.02.2006
(73) Proprietor: Kabushiki Kaisha Toshiba, Tokyo 105-8001 (JP)
(72) Inventor: Uematsu, Ikuo, Tokyo (JP); Tono, Ichiro, Tokyo (JP); Oomiya, Kayoko, Tokyo (JP); Eto, Hideo, Tokyo (JP)
(74) Representative: Granleese, Rhian Jane

(56) References cited:
- WO-A-98/21571
- US-A- 5 822 472
- US-B1- 6 312 961
- PATENT ABSTRACTS OF JAPAN vol. 2003, no. 12, 5 December 2003 (2003-12-05) & JP 2004 085212 A (TOSHIBA CORP), 18 March 2004 (2004-03-18)
- PATENT ABSTRACTS OF JAPAN vol. 1997, no. 07, 31 July 1997 (1997-07-31) & JP 09 061346 A (NEC CORP), 7 March 1997 (1997-03-07)

## Description

### BACKGROUND OF THE INVENTION

### 1. Field of the Invention

The present invention relates to an apparatus for measuring a specific molecule included in a specimen and in particular to an optical biosensor.

### 2. Description of the Related Art

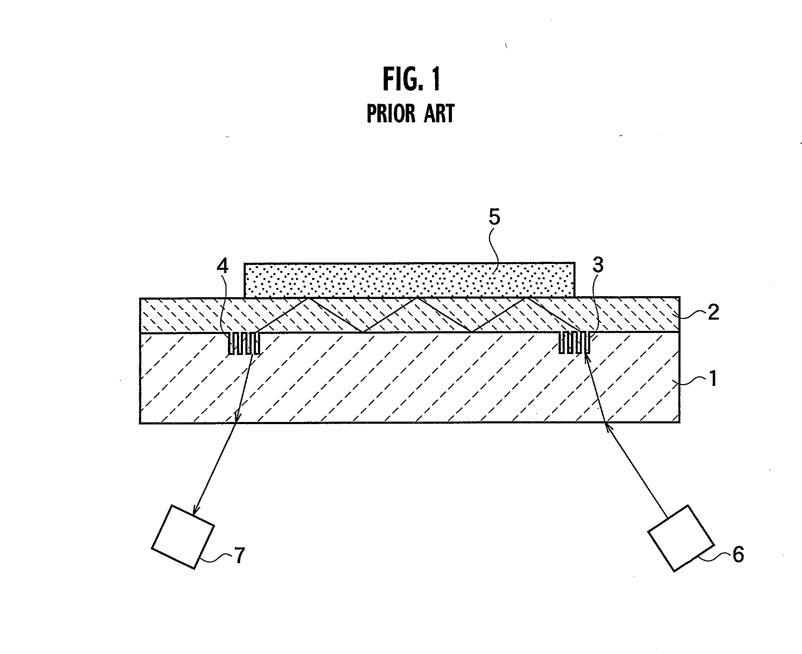

A planar lightwave circuit sensor using optical waveguide phenomenon is widely spread as the sensor to measure the amount of the bio molecules existing in body fluid such as blood. As shown in FIG.1, the planar lightwave circuit has a light source 6, a substrate 1 receiving a light from the light source 6, a first grating 3 delineated on the substrate 1 so as to receive an incident light, a second grating 4 delineated on the substrate 1 so as to diffract the incident light in the direction of the exterior, and the photo detector 7 receiving the diffracted light. Further, the planar lightwave circuit sensor has a single optical waveguide membrane 2 disposed on the substrate 1 so as to transmit the incident light, and a glucose oxidase (GOD) membrane 5 disposed on the optical waveguide membrane 2. The GOD membrane 5 identifies the bio molecules and transforms the information about the amount of the identified bio molecules to a change of an optical intensity.

An existing method for analyzing the bio molecules existing in the blood by the planar lightwave circuit sensor is as follows. At first, the blood is collected from vein with a syringe. The collected blood is dropped on the GOD membrane 5. The laser light is emitted from the light source 6 and diffracted by the first grating 3. The diffracted light penetrates the optical waveguide membrane 2. The evanescent wave is generated at the interface between the optical waveguide membrane 2 and the GOD membrane 5. The intensity of the evanescent wave changes by reaction between the dropped bio molecules contained in the blood and the GOD. The photo detector 7 receives the diffracted light from the second grating 4 and detects the changes of the evanescent wave intensity to analyze the bio molecules contained in the blood as disclosed in Japanese Patent Application JP9061346A.

However, manufacturing the evanescent wave generates requires precision apparatus and techniques. This is because the incident light reaching at the interface should be diffracted at appropriate angle to measure the change of the evanescent wave intensity precisely.

JP 2004085212 relates to an optical waveguide type glucose sensor having a first optical waveguide layer and a second optical waveguide layer. The first optical waveguide layer is used to guide light having a TM mode and the second optical waveguide layer is used to guide light having a TE mode.

### SUMMARY OF THE INVENTION

An aspect of the present invention provides an optical biosensor comprising a sensing membrane that is containing an enzyme and a chromogenic reagent, characterized in that the optical biosensor comprises:
a first grating and a second grating, the sensing membrane provided between the first grating and the second grating;
a total reflection plate (10) having a glass layer and a silicon oxide layer on the glass layer, the silicon oxide layer consisting of a silicon oxide, the silicon oxide layer being disposed below the sensing membrane, the first grating, and the second grating so that an incident light penetrating the total reflection plate is diffracted by the first grating, totally internally reflected within the total reflection plate, partially absorbed below the sensing membrane, and diffracted by the second grating.

### BRIEF DESCRIPTION OF DRAWINGS

FIG. 1 is a cross section of a planar lightwave circuit sensor;
FIG. 2 is a plan view of an optical biosensor in accordance with an example useful for understanding the present invention;
FIG. 3 is a cross section of the optical biosensor in a direction of a line I-I shown in FIG. 2 in accordance with an example useful for understanding the present invention;
FIG.4 is a cross section of the optical biosensor in accordance with a first modification of the embodiment of the present invention;
FIG. 5 is a first graph showing relation between binding energy of materials and relative intensity obtained by X-ray photoelectron spectroscopy;
FIG.6 is a second graph showing relation between binding energy of materials and relative intensity obtained by X-ray photoelectron spectroscopy; and
FIG.7 is a cross section of the optical biosensor in accordance with a second modification useful for understanding the present invention.

### DETAILED DESCRIPTION OF THE INVENTION

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

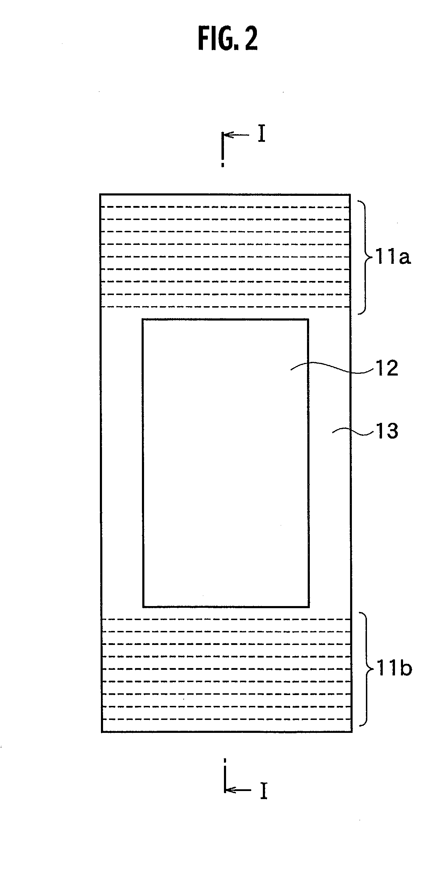

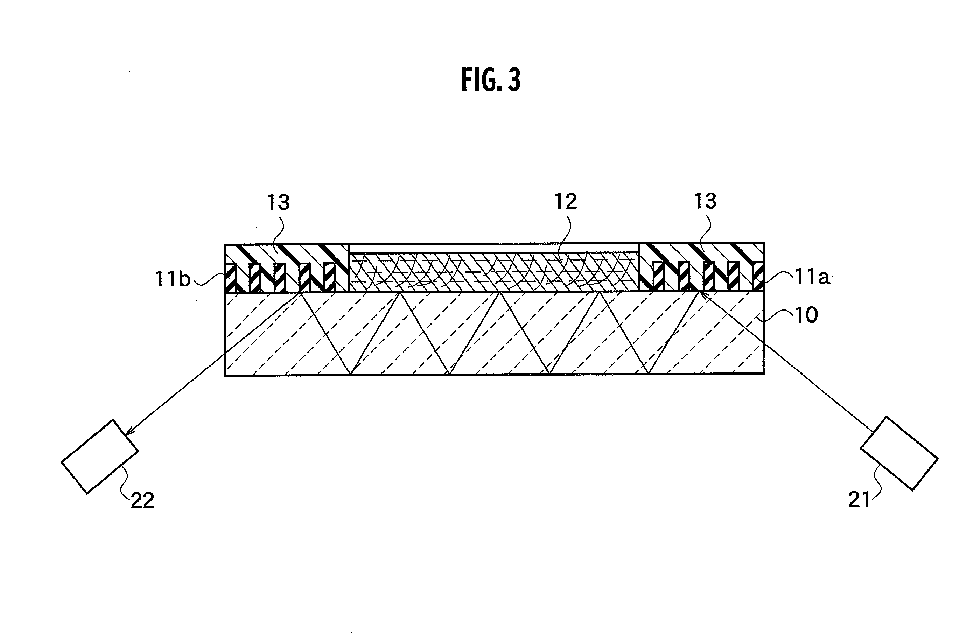

With reference now to FIGs. 2 and 3, an optical biosensor in accordance with an example useful for understanding the present invention has a total reflection plate 10, a first grating 11a and a second grating 11b on the top surface of the total reflection plate 10, a sensing membrane 12 sandwiched by the first and second gratings 11a, 11b on the top surface of the total reflection plate 10. An incident light is totally internally reflected and transmitted within the total reflection plate 10. The first grating 11a and the second grating 11b are disposed separately on the total reflection plate 10. The sensing membrane 12 contains enzyme and chromogenic reagent. The optical biosensor further has a protection sheet 13 disposed on the top surface of the total reflection plate 10. The protection sheet 13 surrounds the sensing membrane 12. And the protection sheet 13 fits and covers the first and second gratings 11a, 11b.

The total reflection plate 10 is composed of quartz (SiO₂), for example. The first and second gratings 11a, 11b are composed of material of which refractive index is higher than the total reflection plate 10. For instance, titanium oxide (TiO₂), zinc oxide (ZnO), niobic acid lithium (LiNbO₃), gallium arsenide (GaAs), indium tin oxide (ITO), polyimide, or tantalum oxide (Ta₂O₅) is deposited on the total reflection plate 10 by chemical vapor deposition (CVD) and selectively etched away with dry etching to form the first and second gratings 11a, 11b.

The sensing membrane 12 is formed by gelation of the enzyme and the chromogenic reagent with cellulose derivative. For example, glucose oxidase (GOD), peroxidase (POD), or mutarotase is useful as the enzyme in the sensing membrane 12 when the biosensor is used for inspecting glucose in a body fluid. 3,3',5,5' - tetramethylbenzidine (TMBZ) is useful for the chromogenic reagent, for example. Reaction formulas (1) - (3) show reactions between the glucose and the enzyme to stain the sensing membrane 12. It should be noted only product related to pigmentation of the sensing membrane 12 is shown in each of reaction formulas (1) - (3).

Glucose + GOD → H₂O₂ (1)

H₂O₂ + POD → Oxygen Radical (O*) (2)

O* + Chromogenic reagent → Pigmentation (3)

The protection sheet 13 is composed of material of which refractive index is lower than the first and second gratings 11a, 11b. Also, it is desirable to use the low refractive index material that does not react with the reagents such as the enzyme and the chromogenic reagent. Coating such low refractive index material on the total reflection plate 10 forms the protection sheet 13.

With reference again to FIG.3, the incident light emitted by a light source 21 is diffracted by the first grating 11a. The diffracted incident light is totally internally reflected and transmitted within the total reflection plate 10.

When the incident light is refracted at the interface between the total reflection plate 10 and the sensing membrane 12, evanescent wave is absorbed by the pigmentation of the sensing membrane 12. The pigmentation intensity and the absorbed light intensity are in proportion. Also, the pigmentation intensity and the amount of specimen such as the glucose dropped on the sensing membrane 12 are in proportion.

The incident light reaches the second grating 11b and the incident light is diffracted in the direction of a photo detector 22. By detecting the difference between the light intensities emitted by the light source 21 and received by the photo detector 22, it becomes possible to calculate the amount of specimen such as the glucose dropped on the sensing membrane 12.

The optical biosensor above employs simplified structure. Therefore, it is possible to manufacture the optical biosensor easily.

### (FIRST MODIFICATION)

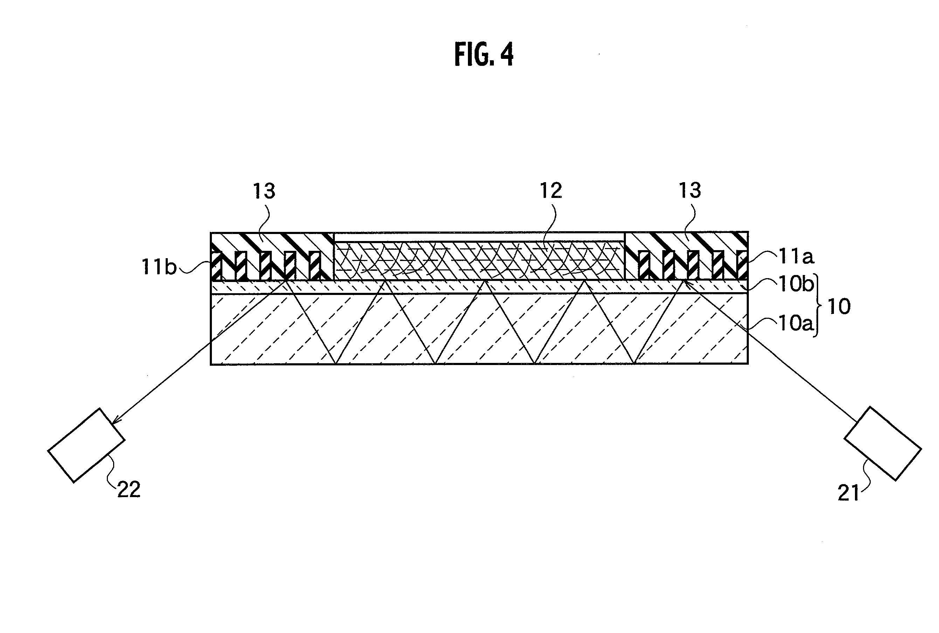

With reference now to FIG.4, the optical biosensor in accordance with an embodiment has the total reflection plate 10 further having a glass plate 10a and a silicon oxide layer 10b disposed on the glass plate 10a. Other elements of the optical biosensor shown in FIG.4 are similar to the optical biosensor shown in FIG.3.

Since the quartz is expensive material, the optical biosensor shown in FIG.4 employs the glass plate 10a and the silicon oxide layer 10b to decrease the manufacturing cost.

The glass plate 10a is composed of non-alkali glass, for example. The silicon oxide layer 10b is formed by depositing silicon oxide (SiO₂) on the glass plate 10a by the CVD or the spattering process. Without the silicon oxide layer 10b, heterogeneous metals exist on the glass plate 10a. Therefore, if the sensing membrane 12 is disposed on the glass plate 10a directly, such heterogeneous metals affect preciseness of the inspection.

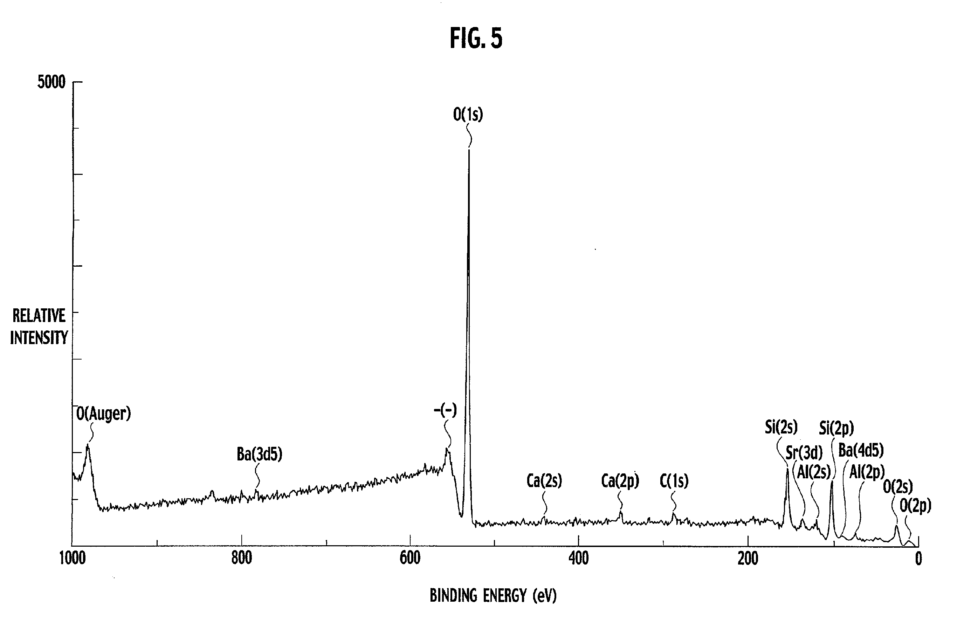

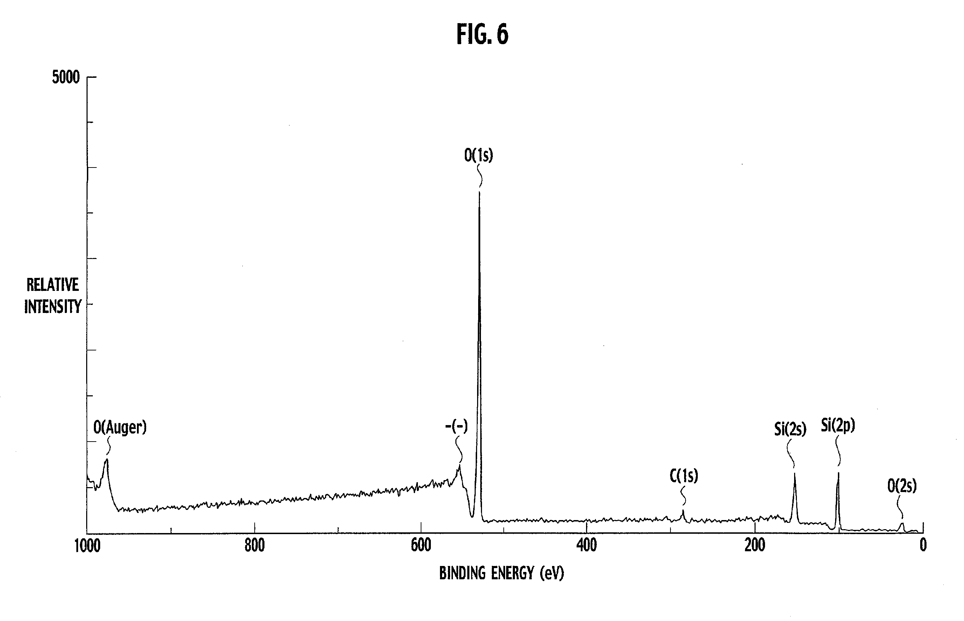

As shown in FIG.5, the X-ray photoelectron spectroscopy (XPS) reveals that silicon (Si), aluminum (Al), barium (Ba), calcium (Ca), and strontium (Sr) exist on the surface of the glass plate 10a. However, by depositing the silicon oxide layer 10b on the glass plate 10a, only silicon (Si) substantially exists on the surface of the total reflection plate 10 as shown in FIG.6. Therefore, depositing the silicon oxide layer 10b shown in FIG.4 eliminates the affect of the heterogeneous metals to the sensing membrane 12. Consequently, it becomes possible to dispose the sensing membrane 12 on the total reflection plate 10 even though the optical biosensor employs the glass plate 10a. As the result, the optical biosensor in accordance with a first modification of the embodiment provides the precise inspection with low manufacturing cost.

### (SECOND MODIFICATION useful for understanding the invention)

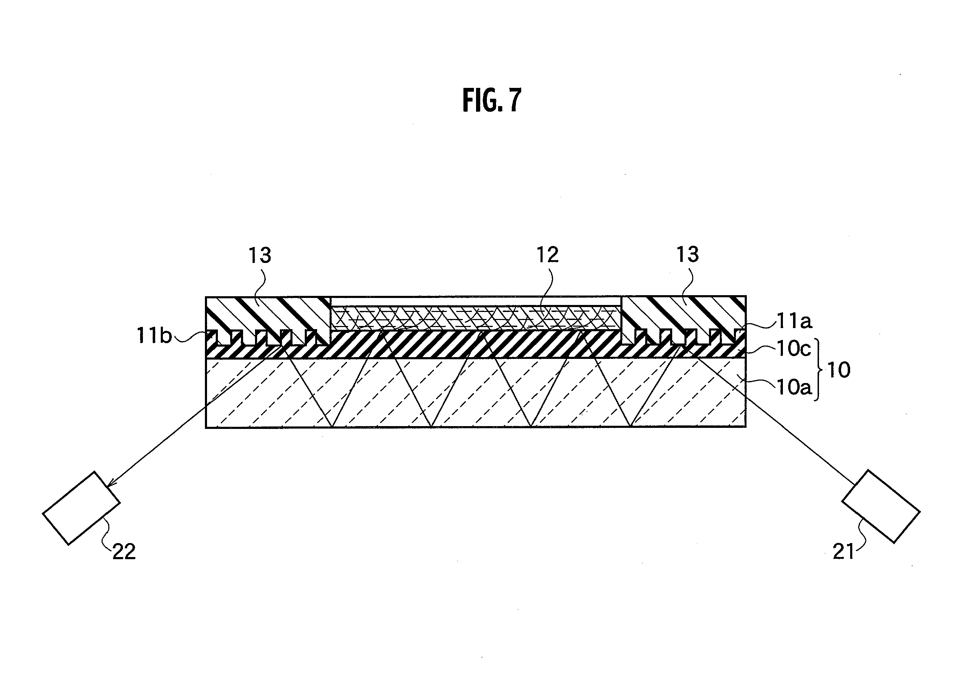

With reference now to FIG. 7, the optical biosensor in accordance with a second modification which is useful for understanding the invention has the total reflection plate 10 further having a glass plate 10a and a titanium oxide layer 10c disposed on the glass plate 10a. Other elements of the optical biosensor shown in FIG.7 are similar to the optical biosensor shown in FIG.4.

Since the quartz is expensive material as described in the first modification, the optical biosensor shown in FIG.7 also employs the glass plate 10a and the titanium oxide layer 10c to decrease the manufacturing cost.

The glass plate 10a is composed of non-alkali glass, for example. The titanium oxide layer 10c is formed by depositing titanium oxide (TiO₂) on the glass plate 10a by the CVD or the spattering process. The titanium oxide layer 10c has thickness of 180nm - 200nm, desirably 200nm so as to maximize the absorbance of the incident light at the interface between the titanium oxide layer 10c and the sensing membrane 12.

After the titanium oxide layer 10c is formed, it is possible to delineate the first and second gratings 11a, 11b easily by selectively etching away the titanium oxide layer 10c with lithography and dry etching techniques.

Further, since the total reflection plate 10 has the glass plate 10a and the titanium oxide layer 10c of which refractive index is higher than the refractive index of the glass plate 10a, the electric field intensity of the evanescent wave is gained at the interface between the titanium oxide layer 10c and the sensing membrane 12.

Consequently, the optical biosensor shown in FIG.7 provides the precise inspection with low manufacturing cost. Further, it is possible to manufacture the optical biosensor shown in FIG.7 easily.

### (OTHER EMBODIMENTS)

Although the invention has been described above by reference to the embodiment of the present invention, the present invention is not limited to the embodiment so described. Modifications and variations of the embodiment so described will occur to those skilled in the art, in the light of the above teachings. Therefore, the scope of the invention is defined with reference to the following claims.

## Claims

1. An optical biosensor comprising a sensing membrane (12) that is containing an enzyme and a chromogenic reagent, **characterized in that** the optical biosensor comprises:
a first grating (11a) and a second grating (11b), the sensing membrane (12) provided between the first grating (11a) and the second grating (11b);
a total reflection plate (10) having a glass layer (10a) and a silicon oxide layer (10b) on the glass layer (10a), the silicon oxide layer (10b) consisting of a silicon oxide, the silicon oxide layer (10b) being disposed below the sensing membrane (12), the first grating (11a), and the second grating (11b) so that an incident light penetrating the total reflection plate (10) is diffracted by the first grating (11a), totally internally reflected within the total reflection plate (10), partially absorbed below the sensing membrane (12), and diffracted by the second grating (11b).

2. The optical biosensor of claim 1, wherein the first and second gratings (11a, 11b) have higher refractive index than the total reflection plate (10).

3. The optical biosensor of claim 1, further comprising a protection sheet (13) covering the first and second gratings (11a, 11b).

4. The optical biosensor of claim 1, wherein the enzyme is a glucose oxidase.

5. The optical biosensor of claim 1, wherein the enzyme is a peroxidase.

6. The optical biosensor of claim 1, wherein the enzyme is a mutarotase.

7. The optical biosensor of claim 1, wherein the chromogenic reagent is a 3, 3', 5, 5' - tetramethylbenzidine.

8. The optical biosensor of claim 1, wherein the sensing membrane contains a cellulose derivative.

## Patentansprüche

1. Optischer Biosensor, umfassend eine Sensormembran (12), die ein Enzym und ein chromogenes Reagens enthält, **dadurch gekennzeichnet, dass** der optische Biosensor Folgendes umfasst:
ein erstes Gitter (11a) und ein zweites Gitter (11b), wobei die Sensormembran (12) zwischen dem ersten Gitter (11a) und dem zweiten Gitter (11b) bereitgestellt ist;
eine Totalreflexionsplatte (10) mit einer Glasschicht (10a) und einer Siliziumoxidschicht (10b) auf der Glasschicht (10a), wobei die Siliziumoxidschicht (10b) aus Siliziumoxid besteht, wobei die Siliziumoxidschicht (10b) unterhalb der Sensormembran (12), des ersten Gitters (11a) und des zweiten Gitters (11b) angeordnet ist, so dass einfallendes Licht, das die Totalreflexionsplatte (10) durchdringt, von dem ersten Gitter (11a) abgelenkt wird, innerhalb der Totalreflexionsplatte (10) intern vollständig reflektiert wird, unterhalb der Sensormembran (12) teilweise absorbiert wird und vom zweiten Gitter (11b) abgelenkt wird.

2. Optischer Biosensor nach Anspruch 1, wobei das erste und zweite Gitter (11a, 11b) einen höheren Brechungsindex aufweisen als die Totalreflexionsplatte (10).

3. Optischer Biosensor nach Anspruch 1, ferner umfassend eine Schutzfolie (13), die das erste und zweite Gitter ( 11 a, 11b) bedeckt.

4. Optischer Biosensor nach Anspruch 1, wobei das Enzym Glukose-Oxidase ist.

5. Optischer Biosensor nach Anspruch 1, wobei das Enzym Peroxidase ist.

6. Optischer Biosensor nach Anspruch 1, wobei das Enzym Mutarotase ist.

7. Optischer Biosensor nach Anspruch 1, wobei das chromogene Reagens 3,3',5,5'-Tetramethylbenzidin ist.

8. Optischer Biosensor nach Anspruch 1, wobei die Sensormembran ein Zellulosederivat enthält.

## Revendications

1. Biocapteur optique, comprenant une membrane de détection (12) contenant une enzyme et un réactif chromogène, **caractérisé en ce que** le biocapteur optique comprend:
une première grille (11a) et une deuxième grille (11b), la membrane de détection (12) étant disposée entre la première grille (11a) et la deuxième grille (11b) ;
une plaque de réflexion totale (10) ayant une couche de verre (10a) et une couche d'oxyde de silicium (10b) sur la couche de verre (10a), la couche d'oxyde de silicium (10b) consistant en oxyde de silicium, la couche d'oxyde de silicium (10b) étant disposée au-dessous de la membrane de détection (12), de la première grille (11a) et de la deuxième grille (11b) de sorte qu'une lumière incidente pénétrant la plaque de réflexion totale (10) est diffractée par la première grille (11a), intérieurement totalement réfléchie dans la plaque de réflexion totale (10), partiellement absorbée au-dessous de la membrane de réflexion (12), et diffractée par la deuxième grille (11b).

2. Biocapteur optique selon la revendication 1, dans lequel les première et deuxième grilles (11a, 11b) ont un index de réfraction supérieur à celui de la plaque de réflexion totale (10).

3. Biocapteur optique selon la revendication 1, comprenant en outre une pellicule de protection (13) couvrant les première et deuxième grilles (11a, 11b).

4. Biocapteur optique selon la revendication 1, dans lequel l'enzyme est une glucose oxydase.

5. Biocapteur optique selon la revendication 1, dans lequel l'enzyme est une peroxydase.

6. Biocapteur optique selon la revendication 1, dans lequel l'enzyme est une mutarotase.

7. Biocapteur optique selon la revendication 1, dans lequel le réactif chromogène est un 3,3',5,5'-tetraméthylbenzidine.

8. Biocapteur optique selon la revendication 1, dans lequel la membrane de détection contient un dérivé de cellulose.
